# EUROPEAN PATENT APPLICATION

(11) **EP 2 343 664 A1**
(43) Date of publication of application: **13.07.2011**
(21) Application number: 09252840.5
(22) Date of filing: 21.12.2009
(51) Int. Cl.: G06F 21/00, G06F 21/02

(54) **Cryptographic device**

(71) Applicant: NXP B.V., 5656 AG Eindhoven (NL)
(72) Inventor: Hoogerbrugge, Jan, Redhill, Surrey RH1 1DL (GB)
(74) Representative: Ashton, Gareth Mark

(57) **Abstract**

A cryptographic device (2) comprising a processor (16) comprising an instruction pipeline (30), the processor comprising an instruction memory (38), and a pre-fetch buffer (40) positioned between the instruction memory and the remainder of the pipeline the pre-fetch buffer being adapted to hold pre-fetched instructions or parts of instructions.

## Description

This invention relates to a cryptographic device, particularly, but not exclusively to a smart card. The invention relates also to other cryptographic devices such as sim cards for mobile phone, keys for cars, access control to content for set-top boxes and to methods, for altering the power output of such devices. The invention also relates to a method for altering the power output of a cryptographic device, and particularly, but not exclusively to a method for altering the power output of a smart card.

It is well known that it is possible to attack smart cards using power analysis attacks such as simple power analysis (SPA) or differential power analysis (DPA). These methods measure the power consumption or electromagnetic radiation of a cryptographic device such as a smart card, and by applying statistical analysis, they are able to determine information such as secret keys associated with the smart card. Such attacks are possible, because the power consumption of a microprocessor such as a digital CMOS circuit forming a smart card, depends strongly on the computation that it performs.

Known countermeasures against power analysis attacks typically consist of creating noise in the power consumption or radiation output from the smart card. Such noise frustrates statistical analysis techniques. In other words the noise "hides" the actual power output of the smart card and therefore hides the computation being carried out by the smart card.

Although known countermeasures are effective in making a crytopgraphic device less vulnerable to power attacks, since every countermeasure is a barrier against such attacks, the more barriers that are in use, the less vulnerable and more secure will be any particular cryptographic device such as a smart card.

According to a first aspect of the present invention there is provided a cryptographic device comprising a processor comprising an instruction pipeline, the processor comprising an instruction memory, and a pre-fetch buffer positioned between the instruction memory and the remainder of the pipeline, the pre-fetch buffer being adapted to hold pre-fetched instructions or parts of instructions.

It is known that cryptographic devices such as smart cards comprise one or more microprocessors, or cores. Such microprocessors or cores are each driven by a clock.

It is also known that an instruction pipeline is a technique used in the design of digital electronic devices of this type in order to increase their instruction throughput.

An instruction pipeline may be regarded as comprising, *inter alia,* the following stages which are carried out during every clock cycle:
fetch;
decode; and
execute.

The power consumption of the microprocessor, or core, varies strongly depending on the stage being carried out. The decode power and the fetch power tend to be fairly constant, whilst the execute power varies strongly with each instruction. In addition, the stage that requires most power is the execute stage, and it is this variation in the power consumption that may be picked up during a power analysis attack.

By means of the present invention instructions are pre-fetched and held in the pre-fetch buffer until the instructions are required. This alters the power output of the cryptographic device thus making it less vulnerable to a power attack.

Because a significant amount of power is consumed in the pre-fetching process, compared to the overall power consumption of the cryptographic device, the present invention is effective in increasing the security of cryptographic devices and making such devices less vulnerable to power analysis attacks.

By means of the present invention therefore a countermeasure technique is provided against power analysis attacks on cryptographic devices such as smart cards in which noise is generated to hide the computation carried out by the or each processor of the smart card by instruction pre-fetching.

The processor operates normally whilst the pre-fetching is carried out, and the timing of all stages in the instruction pipeline is unaffected by the pre-fetching.

A cryptographic device according to an embodiment of the invention may further comprise a pre-fetch buffer control operably connected to the pre-fetch buffer and to the instruction memory.

The pre-fetch buffer control may be operably connected to the input of the pre-fetch buffer and determines every cycle how many instructions to transfer from the instruction memory to the pre-fetch buffer.

By means of the pre-fetch buffer control, the number of instructions, or parts of instruction per clock cycle that are pre-fetched into the pre-fetch buffer is controlled.

In embodiments of the invention, the pre-fetch buffer control is operatively connected to a variable number stream. The variable number stream, in conjunction with the available space within the pre-fetch buffer, determines how many instructions or part of instructions are pre-fetched into the pre-fetch buffer at any given time.

By introducing variable instruction pre-fetching, noise is created in the fetch power which increases the fetch power output.

The variable number stream may comprise a random number stream. Alternatively, the variable number stream may comprise a stream of pseudo random numbers.

Thus, the number of instructions or parts of instructions that are pre-fetched per cycle varies. The variation may be random or pseudo random, for example.

By pre-fetching a pseudo random number of instructions per clock cycle, the cryptographic device is less vulnerable to attack. This is because true random numbers create true random noises. It is possible that such noise could be factored out by a large number of runs and averaging.

The number of instructions transferred from the instruction memory to the pre-fetch buffer is based on a particular variable or random number input into the pre-fetch buffer control, the state of the pre-fetch buffer, and the taken branch signal coming from the execute stage of the pipeline.

Once this number has been determined, the pre-fetch control instructs the instruction memory to read the appropriate number of instructions, and also instructs the pre-fetch buffer to accept that number of instructions.

The size of the pre-fetch buffer may be any suitable size for the application to which the cryptographic device is to be put. In some embodiments of the invention, the pre-fetch buffer may be adapted to hold 4 instructions, although in other embodiments a different number of instructions may be held in the buffer, for example 8 or 16. In contrast, the size of the instruction memory is normally several kilobytes.

The number of instructions pre-fetched may be determined by a random or pseudo random number stream, in conjunction with the amount of space available in the pre-fetch buffer. More particularly, if N is a random number with a certain distribution, and M is the number of free entries in the pre-fetch buffer, then a minimum of (N, M) instructions may be pre-fetched.

An integral number of instructions may be pre-fetched per clock cycle. Alternatively, smaller entities than an instruction may be pre-fetched per clock cycle. For example bytes, nibbles and/or bits may be pre-fetched.

When smaller entities than an instruction are pre-fetched the security of the cryptographic device may be increased, although the cryptographic device is likely to be more costly to make and to operate.

The pipeline may comprise a direct route between the instruction memory and the pre-fetch buffer. Alternatively, in embodiments of the invention, the pipeline may comprise a bypass enabling instructions from the instruction memory to bypass the pre-fetch buffer before continuing down the pipeline.

According to a second aspect of the present invention there is provided a method of altering the power consumption of a cryptographic device comprising a processor comprising an instruction pipeline comprising an instruction memory, the method comprising the step of pre-fetching a variable number of instructions, or parts of instructions.

The method according to the second aspect of the present invention may further comprise the step of inserting a pre-fetch buffer adapted to hold pre-fetched instructions between the instruction memory and the remainder of the pipeline.

The method of pre-fetching a variable number of instructions may comprise instructing the instruction memory to read a predetermined number of instructions based on a variable number, and then instructing the pre-fetch buffer to accept the same number of instructions.

In embodiments of the invention the method comprises the further step of maintaining the buffer full by fetching a plurality of sequential instructions per clock cycle.

The present invention may be applied to cryptographic devices comprising any type of processor for example a synchronous processor or an asynchronous processor. In addition a cryptographic device according to the present invention may comprise a plurality of such processors.

Embodiments of the invention will now be described by way of example only with reference to the accompanying drawings in which:
Figure 1 is a schematic representation of a cryptographic device according to an embodiment of the invention comprising a smart card;
Figure 2 is a schematic representation of the instruction pipeline of the core (or processor) forming part of the smart card of Figure 1;
Figure 3 is a simplified schematic representation of the power consumption of the smart card of Figure 1 according to an embodiment of the invention;
Figure 4 is a simplified schematic representation of the power consumption of a known cryptographic device; and
Figure 5 is a schematic representation of an instruction pipeline of a core of a known cryptographic device.

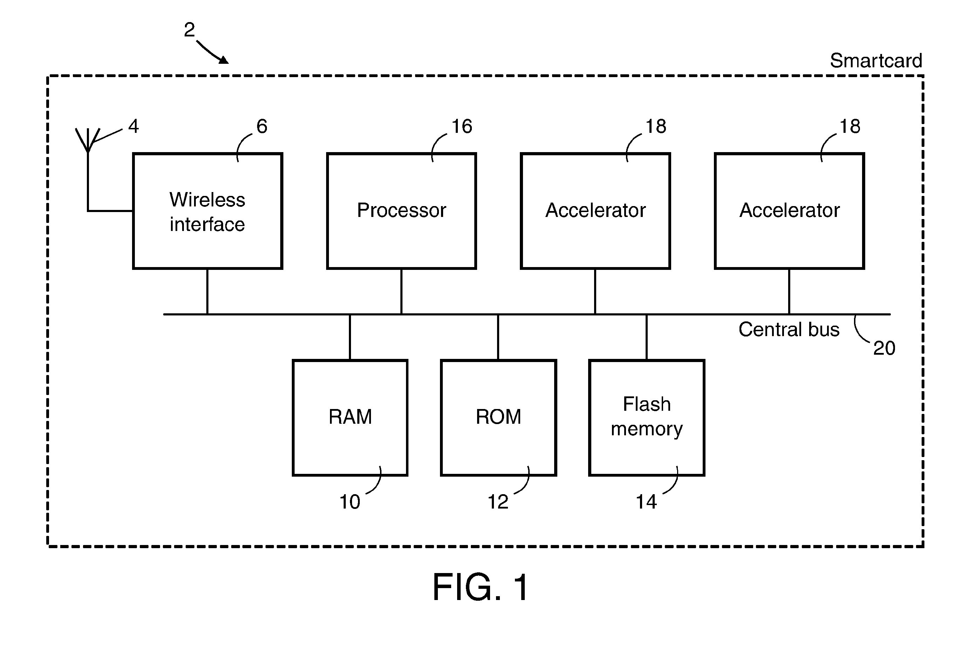

Referring initially to Figure 1, a cryptographic device such as a smart card according to an embodiment of the invention, and designated generally by the reference numeral 2 is illustrated schematically.

As is known in the art, a smart card 2, may comprise an antenna 4 through which data may be transmitted to the smart card and a wireless interface 6 to allow the smart card to communicate with the antenna.

A random access memory (RAM) 10 is available typically to hold temporary data and may be read and written in a known manner. A read only memory (ROM) 12 is available typically for instruction code and constant tables. A flash memory 14 can usually be read and written. Unlike the RAM 10 the content of the flash memory 14 is preserved when the smart card has no power. Typically the flash memory 14 holds personal data such as bank account information. The card further comprises a processor, or core, 16 that runs the application software on the smart card. Examples of suitable cores are ARM, MIPS, 8051. In the illustrated embodiment the smart card 2 comprises a single processor only. However, in other embodiments the smart card could comprise more than one processor.

An accelerator 18 is a dedicated hardware block for carrying out specific tasks for which the programmable processor is not efficient or fast enough. For smart cards it is not uncommon to have accelerators to carry out various encryption algorithms. In the illustrated embodiment of the smart card 2 there are two accelerators 18.

Finally, the smart card 2 comprises a central bus 20 allowing all the blocks of the smart card to communication with one another. Typically the processor 16 uses the bus 20 to load data from other blocks and to store data sent to it.

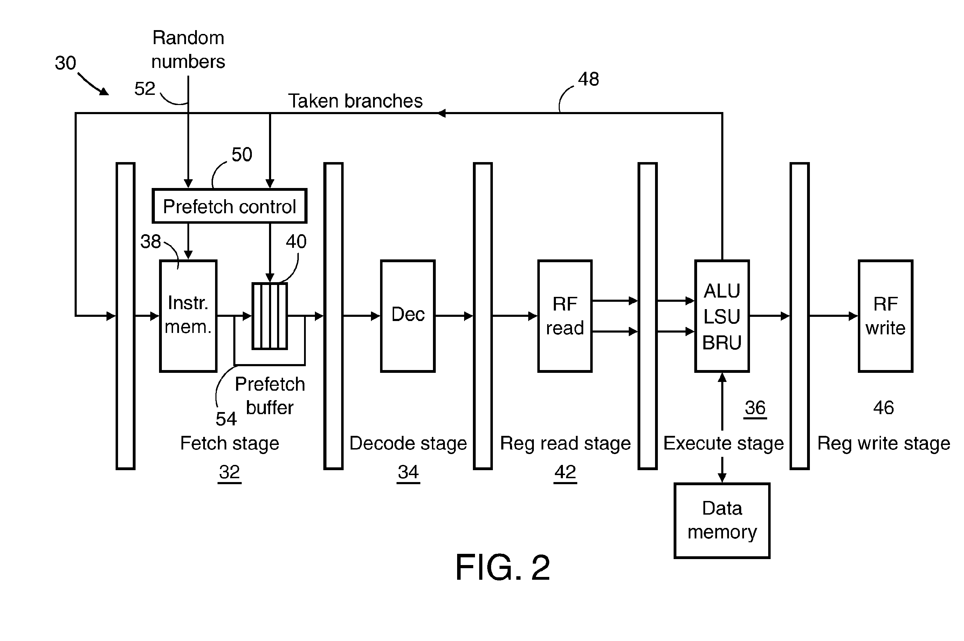

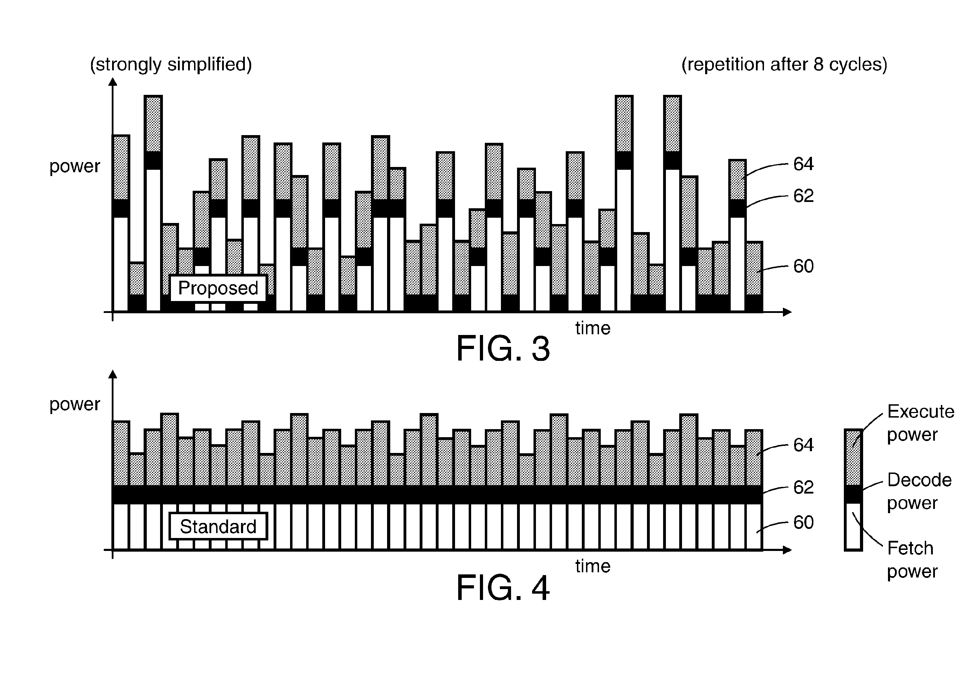

The focus of the present invention is the processor 16 of the smart card 2, and the processor will now be described in further detail with reference particularly to Figures 2 and 3.

The processor 16 comprises an instruction pipeline 30 shown schematically in Figure 2.

In accordance with the invention, and as will be described in more detail hereinbelow, variable instruction pre-fetching is introduced into the instruction pipeline of the processor 16 of the smart card 2 without affecting the timing of any of the other stages of pipeline. This has the effect of varying the fetch power consumption as can be seen from Figure 3, and as will be described in more detail herein below. This in turn has the effect of "hiding" the pattern of variation in the power consumption caused by the execution of instructions in the instruction pipeline. This means that if the cryptographic device is the target of a power attack, an attacker is unlikely to be able to decipher which instructions are being carried out since the pattern of variation in power consumption due to the execution of the instructions is hidden.

The instruction pipeline 30 may be regarded as comprising the stages of *inter alia:* fetch stage 32, decode stage 34, and execute stage 36. The fetch stage 32 of the pipeline 30 comprises an instruction memory 38 in which instructions of the complete program for the smart card 2 are stored, and a pre-fetch buffer 40 positioned between the instruction memory 36 and the remainder of the pipeline 30.

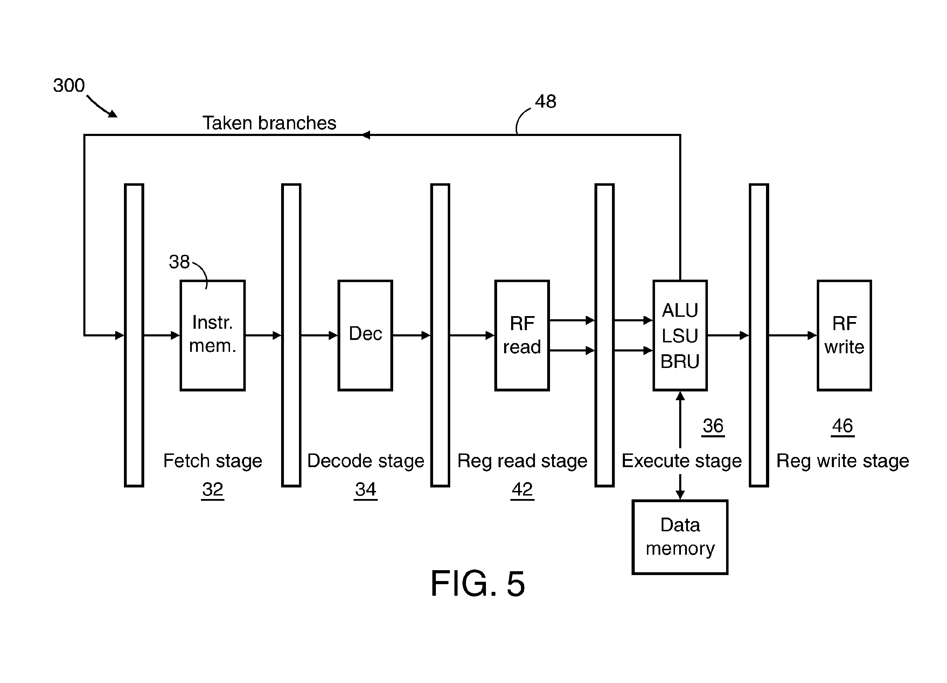

Before describing in further detail the fetch stage of the instruction pipeline 30, the further stages of the pipeline 30 will be described in more detail. In addition, the instruction pipeline 30 forming part of an embodiment of the present invention will also be compared to a known instruction pipeline 300 illustrated in Figure 5. Parts of the known instruction pipeline 300 which are common to the instruction pipeline 30 forming part of an embodiment of the invention have been given corresponding reference numerals for ease of reference.

Following the fetch stage, the instruction pipeline continues to the decode stage 34. At this stage, instructions are decoded and it is determined which control signal should be used to handle the instructions. The next stage is the register read stage 42 where operands from the register file (RF) are read. Typically there are two operands in the register file RF.

Next, the pipeline continues to the execute stage 36 where instructions are executed. The execute stage comprises an arithmetic logic unit (ALU), a branch unit (BRU) and an load store unit (LSU), for example. Examples of instruction execution are additions, multiplications etc. Instructions are received from, and transmitted to a data memory 44.

Finally, instructions, or parts of instructions, passing through the pipeline arrive at the register write stage 46 where the results achieved by carrying out the instructions are written to the register file RF. Instructions are then taken from the data memory via a taken branch 48 into the pipeline at the beginning of the pipeline in order to pass through the pipeline again.

The pipeline 30 forming part of an embodiment of the invention thus differs from the known pipeline 300 in that it further comprises the pre-fetch buffer 40 which is controlled by a pre-fetch buffer control 50. The pre-fetch control is itself controlled by a stream 52 of variable numbers which, in this embodiment, is a stream of random numbers. The effect of the pre-fetch buffer 40 in conjunction with the pre-fetch buffer control 50, and the random number stream 52 is to pre-fetch instructions, or parts of instructions and to hold them in the pre-fetch buffer until they are required. This step is carried out whilst the normal or operating instructions of the pipeline continue unaffected.

In order to achieve this, the pre-fetch control is coupled to the input of the pre-fetch buffer and to an input of the instruction memory 38. The pre-fetch buffer control 50 determines every cycle how many instructions to transfer from the instruction memory 38 to the pre-fetch buffer 40. This determination is based on a random number received from the random number stream 52, the state of the pre-fetch buffer 40, as well as the signal on the taken branch 48 coming from the execute stage 36 of the pipeline. Once the number of instructions to be transferred from the instruction memory 38 to the pre-fetch buffer 50 has been determined, the pre-fetch control 40 will instruct the instruction memory 38 to read the appropriate number of instructions, and will tell the pre-fetch buffer to accept the appropriate number of instructions.

This means that power consumption of the cryptographic device 2 is distorted due to the fact that pre-fetching is taking place.

The operation of the pre-fetch buffer 40 and the pre-fetch buffer control 50 will now be described in more detail.

Typically, the pre-fetch buffer 40 will be a small buffer that will hold a few instructions, for example 4 instructions that are about to be executed, assuming that there are no taken branches that change the control flow of the instructions through the instruction pipeline.

Let us assume that the instruction at address 1000 is in the decode stage 34. This means that, assuming that there were no recent changes in the control flow, the register read stage would hold the instruction at address 999, the execute stage 36 would hold the instruction at address 998, and the register write stage 46 would hold the instruction at address 997.

In the illustrated embodiment, the pre-fetch buffer 40 is adapted to hold a maximum of 4 instructions. This means that under the circumstances described above, the state of pre-fetch buffer 40 could be as follows:
[---- ---- 1002 1001]

This means that the pre-fetch buffer 40 contains two instructions: 1001 and 1002.

The dashes indicate that the other two entries are not used. In other words, the pre-fetch buffer is not full as it only contains two out of a maximum four instructions.

In the next clock cycle 1001 shifts to the decode stage, 1000 to the register read stage, 999 to the execute stage, and 998 to the register write stage.

The instruction at address 997 is no longer in the pipeline.

The pre-fetch buffer control 50 then decides, based on the random number input, to pre-fetch two further instructions. This would mean that the state of the pre-fetch buffer 40 would then become:
[ ---- 1004 1003 1002]

It can be seen therefore that the 1002 instruction shifts one position to the right and 1003 and 1004 are shifted into the pre-fetch buffer.

Depending on the random number stream, the pre-fetch buffer control 50 could, instead, decide to pre-fetch no instructions. Under such circumstances the state of the buffer would be as follows:
[---- ---- ---- 1002]

It can be seen that in this embodiment of the invention, the pre-fetch buffer comprises a first in, first out (FIFO) structure.

In this embodiment of the invention, it is assumed that successive instructions are stored at successive memory addresses. In other words, each memory element holds one instruction. However in practice, many processors have instructions which require multiple memory elements to store. For example, many RISC type processors have instructions that are four bytes in size. This means that successive instructions are then stored at addresses 1000, 1004, 1008, 1012 etc.

We will now consider what happens when a taken branch changes the control flow. Let us assume that the taken branch is to address 2000. To do this, the pre-fetch buffer 40 must be reset, and a random number of instructions must be fetched, starting at 2000.

Let us assume that two instructions are pre-fetched. The state of the buffer then becomes:
[---- ---- 2001 2000]

In the next clock cycle, the decoder 34 can read instruction 2000.

The pipeline 30 further comprises a bypass 54 enabling instructions from the instruction memory to bypass the pre-fetch buffer 40. This means that it is possible to operate the processor faster by making use of the bypass 54. In such a case, it is possible to fetch 2000 and 2001 at the same time and to direct 2000 directly to the input register at the decode stage, and to put 2001 in the pre-fetch buffer. This would mean that the status of buffer would become:
[---- ---- ---- 2001]

This means that taken branches are executed one cycle faster than without the bypass.

In other words, when a taken branch is encountered, the pre-fetch buffer 40 is flushed. The pre-fetch buffer control 50 then determines to fetch X instructions from the instruction memory 38. By means of the bypass 54, the first of these X instructions is sent directly to the input of the decode stage 34. The other X-1 instructions are sent to the pre-fetch buffer 40 which is now empty having just been flushed.

As explained above, taken branches change the control flow of the instruction pipeline and serve to flush the pre-fetch buffer. This means that some power is wasted because in the event of a taken branch the pre-fetched instructions in the pre-fetch buffer are not used.

Some processors have conditional execution of taken branches. In such processors, the number of branching is reduced thus making the cryptographic device more power efficient.

In some embodiments of the invention, the pre-fetch buffer could check whether it is pre-fetching to a branch that is no longer being used. Under such circumstances, pre-fetching could cease. Whilst this would make the cryptographic device more power efficient, it could reduce the security of the device to power analysis attacks.

In other embodiments of the invention the pre-fetching could be turned off by software in the processor whenever protection is not needed in certain parts of the code. Again, whilst this may make the cryptographic device more power efficient, it could reduce the security of the device.

Referring to Figure 3, the power consumption of the smart card 2 of Figure 1 is illustrated schematically. The fetch power consumption is designated by the reference numeral 60, the decode power consumption is designated by the reference numeral 62, and the execute power consumption is designated by the reference numeral 64.

As can be seen from Figure 3, the instruction pre-fetching consumes a significant portion of the total power consumption of the core and therefore the variable instruction pre-fetching provides computation being carried out by the smart card.

The power consumption of the smart card 2 as shown in Figure 3 may be compared to the power consumption of a known smart card as shown in Figure 4. The fetch power consumption, decode power consumption, and execute power consumption of a known smart card as shown in Figure 4 have been given correspondence reference numerals to those of Figure 3.

As can be seen from Figure 4, the fetch power consumption and the decode power consumption in known smart cards are substantially uniform throughout the clock cycle, but the execute power consumption varies significantly depending on the instruction being executed. It is this variation in power consumption caused by the execution of instructions that can be detected and analysed in power attacks.

By means of the present invention, variable instruction pre-fetching may be used to turn the relatively constant instruction fetch power into a noise generator that hides the power that varies per instruction. This frustrates statistical analysis techniques.

Unlike many other known techniques used to prevent power analysis, the method of embodiments of the present invention is transparent to the application running on the programmable processor. There is therefore no performance impact created through the present invention and there is only a small power consumption penalty.

## Claims

1. A cryptographic device (2) comprising a processor (16) comprising an instruction pipeline (30), the processor comprising an instruction memory (38), and a pre-fetch buffer (40) positioned between the instruction memory and the remainder of the pipeline the pre-fetch buffer being adapted to hold pre-fetched instructions or parts of instructions.

2. A cryptographic device according to Claim 1 further comprising a pre-fetch buffer control (50) connected to the pre-fetch buffer and to the instruction memory.

3. A cryptographic device according to Claim 2 wherein the pre-fetch buffer control is operatively connected to a variable number stream (52).

4. A cryptographic device according to any one of the preceding claims wherein the pre-fetch buffer is adapted to hold 4 instructions.

5. A cryptographic device according to any one of the preceding claims wherein an integral number of instructions are pre-fetched per clock cycle.

6. A cryptographic device according to any one of the preceding claims wherein the instruction pipeline comprises a bypass enabling instructions from the instruction memory to bypass the pre-fetch buffer.

7. A method of altering the power consumption of a cryptographic device (2) comprising a processor (16) comprising an instruction pipeline (30) comprising instruction memory (38), the method comprising the step of pre-fetching a variable number of instructions or parts of instructions.

8. A method according to Claim 7 comprising the further step of inserting a pre-fetch buffer (40) adapted to hold pre-fetched instructions between instruction memory and the remainder of the pipeline.

9. A method according to Claim 8 wherein the step of pre-fetching a variable number of instructions comprises instructing the instruction memory to read a predetermined number of instructions based on a variable number, and then instructing the pre-fetch buffer to accept the same number of instructions.

10. A method according to any one of Claims 7 to 9 wherein the number of instructions that are pre-fetched depends on a variable number stream and in the state of the pre-fetch buffer.

11. A method according to any one of Claims 7 to 10 wherein the method comprises the further step of maintaining the pre-fetch buffer full by fetching a plurality of sequential instructions per clock cycle.
